(19) Europäisches Patentamt
European Patent Office
Office européen des brevets

(11) EP 2 607 443 A1

(12) EUROPEAN PATENT APPLICATION
published in accordance with Art. 153(4) EPC

(43) Date of publication:
**26.06.2013 Bulletin 2013/26**

(21) Application number: **11818208.8**

(22) Date of filing: **17.08.2011**

(51) Int Cl.:
***C09J 133/14*** *(2006.01)* ***C09J 7/02*** *(2006.01)*
***C09J 133/24*** *(2006.01)* ***G06F 3/041*** *(2006.01)*

(86) International application number:
**PCT/JP2011/068600**

(87) International publication number:
**WO 2012/023567 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2010 JP 2010184449**

(71) Applicant: **Daido Chemical Corporation**
**Osaka-shi**
**Osaka 555-0011 (JP)**

(72) Inventors:
- **SHINIKE, Hitoshi**
**Osaka-shi**
**Osaka 555-0011 (JP)**
- **NOGUCHI, Kouichi**
**Osaka-shi**
**Osaka 555-0011 (JP)**
- **SHIRAISHI, Daisuke**
**Osaka-shi**
**Osaka 555-0011 (JP)**

(74) Representative: **Nieuwenhuys, William Francis**
**Marks & Clerk LLP**
**90 Long Acre**
**London**
**WC2E 9RA (GB)**

# (54) ACRYLIC POLYMER FOR USE IN PRESSURE-SENSITIVE ADHESIVE COMPOSITION FOR TOUCH PANEL

(57) An object of the present invention is to solve the above-mentioned problem of the prior art and provide a pressure-sensitive adhesive composition that has high transparency, excellent adhesion to various substrates such as glass, acrylic, polycarbonate, and PET, as well as having satisfactory high-temperature durability and moist-heat resistance, that is non-corrosive to transparent conductive thin films such as ITO, and to thin metal films, the non-corrosiveness being an important property required of pressure-sensitive adhesives especially for capacitive touch screen panels, and that has excellent gap-filling ability and has high permittivity. Another object of the invention is to provide a pressure-sensitive adhesive sheet. Provided is an acrylic polymer for use in a pressure-sensitive adhesive composition for a touch screen panel, the acrylic polymer being obtained by copolymerizing monomer components comprising (a) a (meth)acrylic acid ester monomer having a $C_{1-12}$ hydrocarbon group, (b) a hydroxy group-containing (meth) acrylic acid ester monomer, (c) an amide group-containing monomer, and (d) a vinyl ester monomer. The acrylic polymer has an acid value of 0.1 mg KOH/g or less, a weight-average molecular weight of 400,000 to 2,000,000, a Tg of -80 to 0ºC, and a permittivity of 3 to 6.

EP 2 607 443 A1

## Description

### Technical Field

The present invention relates to an acrylic polymer for use in a pressure-sensitive adhesive composition for a touch screen panel. More specifically, the present invention relates to an acrylic polymer for use in a pressure-sensitive adhesive composition for a touch screen panel, which is excellent in terms of transparency, adhesion, durability, non-corrosiveness, gap-filling ability to fill the printing gap, high permittivity, and coatability. A pressure-sensitive adhesive composition comprising the acrylic polymer for use in a pressure-sensitive adhesive composition for a touch screen panel according to the present invention may be directly applied, or formed into a sheet and then applied, to various types of substrates (e.g., image display devices) in the form of sheets or films that form a touch screen panel, which is an optical display element.

### Background Art

An optical display element touch screen panel (also referred to as a "touch screen panel") is typically formed on the display screen side of an FPD (flat panel display), such as a liquid crystal display, or of a CRT (cathode ray tube) display. The touch screen panel is composed of a combination of a liquid crystal display and a device that immediately identifies the coordinate axes and inputs data. Using a liquid crystal display in combination with software enables a wide variety of operation.

Although various touch screen panel systems exist, two main systems are the resistive touch system and the capacitive touch system. The capacitive touch system is further classified into the surface capacitive touch system and the projective capacitive touch system. The projective capacitive touch system employs an integrative method using X-Y grid drive electrodes, and examples of this system include the wire sensor system and the grid system. Further, the grid system includes the self-capacitance detection method using one sensor and the mutual capacitance detection method using two transmitting/receiving sensors. Examples of systems other than the resistive touch system and the capacitive touch system include the optical system, the ultrasonic system, the electromagnetic induction system, and the in-cell system.

A pressure-sensitive adhesive (a pressure-sensitive adhesive sheet) for use in a touch screen panel may be used, for example, to bond an uppermost cover panel (glass or resin) in direct contact with an ITO surface to a substrate (a glass plate or resin plate) having the ITO surface, or to bond a substrate having an ITO surface to a component on the back (e.g., a TAC film of a polarizing plate in a liquid crystal display). When a touch screen panel and a liquid crystal display (a polarizing plate) disposed on the back (backlight side) are bonded together on their entire mating surfaces, a substrate-less double-sided pressure-sensitive adhesive sheet, called "optical bonding", is used. The properties required of this type of pressure-sensitive adhesive sheet are different from those required of a pressure-sensitive adhesive sheet used on the inside of the touch screen panel.

Pressure-sensitive adhesives (also referred to as "adhesives") and pressure-sensitive adhesive sheets conventionally used for this purpose have a durability problem, particularly durability at high temperatures or under high-temperature and high-humidity conditions. Generation of fine bubbles and coloring was observed at high temperatures, and turbidity and peeling of the pressure-sensitive adhesive layer, as well as generation of fine bubbles, were observed under high-temperature and high-humidity conditions. A recent trend is that to improve design, decoration is made in a flat image display portion by printing or the like. However, if a pressure-sensitive adhesive is directly applied to an uneven surface caused by such decoration, bubbles may be entrapped between the uneven surface and the pressure-sensitive adhesive. It was thus difficult to meet the requirements of both durability enhancement and gap-filling ability.

Patent Literature (PTL) 1 discloses a pressure-sensitive adhesive that can inhibit generation of bubbles, which may occur when a flat image display portion and a transparent panel having an uneven surface in its decorative portion are bonded together. However, because the disclosed pressure-sensitive adhesive comprises a carboxy group-containing monomer as a pressure-sensitive adhesive component, the pressure-sensitive adhesive causes corrosion when brought into direct contact with a metal surface or a metal thin film layer. Accordingly, it was difficult to use the pressure-sensitive adhesive for this purpose (for bonding a transparent panel having an uneven surface).

Further, the projective capacitive system or the like has the following problem: an acid component, etc., contained in the pressure-sensitive adhesive corrodes a transparent conductive coating film, such as ITO, formed on a glass or resin sheet or film, a circuit formed by etching such a transparent conductive coating film, and fine metal wiring of silver, copper, aluminum, or the like. In view of this problem, a pressure-sensitive adhesive that does not contain a carboxy group-containing monomer pressure-sensitive adhesive was proposed. However, the proposed pressure-sensitive adhesive is unsatisfactory in terms of basic physical properties such as pressure-sensitive adhesive strength and holding force, and cannot exhibit sufficient performance as a pressure-sensitive adhesive for touch screen panels. Thus, the problem has not yet been fully solved.

Patent Literature (PTL) 2 discloses a pressure-sensitive adhesive composition not containing a carboxy group-containing monomer and containing alkoxy acrylate as a main monomer component, the composition not being corrosive to a metal foil layer. However, this publication is silent about turbidity of the pressure-sensitive adhesive layer under high-temperature and high-humidity conditions, and about peel strength to various adherends. The disclosed pressure-sensitive adhesive composition is insufficient in these properties.

In particular, in capacitive touch screen panels, sensitivity (responsiveness) when the touch screen panel is touched with a fingertip is important. However, commonly used pressure-sensitive adhesive s and pressure-sensitive adhesive sheets have low permittivity. Patent Literature (PTL) 3, which discloses a pressure-sensitive adhesive composition and a sheet produced using the pressure-sensitive adhesive composition, nowhere mentions this property. The pressure-sensitive adhesive composition or sheet disclosed in PTL 3 is totally insufficient in terms of properties required of pressure-sensitive adhesive s or pressure-sensitive adhesive sheets for touch screen panels. No product that meets the above conditions has been marketed yet.

Citation List

Patent Literature

PTL 1: JP2009-155503A
PTL 2: JP2009-79203A
PTL 3: JP2005-325250A

Summary of Invention

Technical Problem

An object of the present invention is to solve the problem of the prior art as mentioned above and to provide a pressure-sensitive adhesive composition and a pressure-sensitive adhesive sheet that have high transparency, excellent adhesion to various substrates such as glass, acrylic, polycarbonate, and PET, as well as satisfactory high-temperature durability and moist-heat resistance, that are non-corrosive to transparent conductive films such as ITO, the non-corrosiveness being an important property required of pressure-sensitive adhesive s especially for capacitive touch panels, and that have excellent gap-filling ability and high permittivity.

Solution to Problem

The present inventors conducted extensive research and, by using an amide group-containing monomer, finally developed a pressure-sensitive adhesive composition that has high adherence and adhesion to various substrates, that does not generate bubbles at the interface with an adherend and is free of peeling, bulges, and whitening even under severe conditions, that is not corrosive to transparent conductive films, such as ITO, and that has excellent optical properties.

The present invention provides an acrylic polymer for use in a pressure-sensitive adhesive composition for a touch screen panel, a pressure-sensitive adhesive composition for a touch screen panel, and a pressure-sensitive adhesive sheet for use in a touch screen panel.

Item 1. An acrylic polymer for use in a pressure-sensitive adhesive composition for a touch screen panel, the compound being obtained by copolymerizing monomer components comprising

(a) a $C_{1-12}$ hydrocarbon group-containing (meth)acrylic acid ester monomer,
(b) a hydroxy group-containing (meth)acrylic acid ester monomer,
(c) an amide group-containing monomer, and
(d) a vinyl ester monomer, and

the compound having a resin acid value of 0.1 mg KOH/g or less, a weight-average molecular weight of 400,000 ($40x10^4$) to 2,000,000 ($200x10^4$), a Tg of -80 to 0°C, and a permittivity of 3 to 6.

Item 2. The acrylic polymer according to Item 1, wherein the ratio of the monomer components forming the acrylic polymer is that
the content of the $C_{1-12}$ hydrocarbon group-containing (meth)acrylic acid ester monomer (a) is 60 to 95 mass%,
the content of the hydroxy group-containing (meth)acrylic acid ester monomer (b) is 0.1 to 20 mass%,

the content of the amide group-containing monomer (c) is 0.1 to 30 mass%, and
the content of the vinyl ester monomer (d) is 0.1 to 10 mass%.

Item 3. The acrylic polymer according to Item 1 or 2, wherein the amide group-containing monomer (c) is represented by Formula (1)

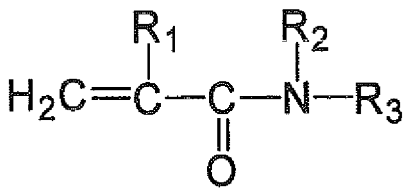 (1)

(wherein $R_1$ is hydrogen or methyl, and $R_2$ and $R_3$ are the same or different and each represents hydrogen or $C_{1-4}$ linear or branched alkyl).

Item 4. The acrylic polymer according to one of Items 1 to 3, wherein the touch screen panel is a capacitive touch screen panel.

Item 5. A pressure-sensitive adhesive sheet for use in a capacitive touch screen panel, comprising the acrylic polymer of one of Items 1 to 3.

Item 6. A pressure-sensitive adhesive composition for a touch screen panel, comprising the acrylic polymer of one of Items 1 to 3 and a crosslinking agent that crosslinks with the acrylic polymer.

Item 7. The pressure-sensitive adhesive composition for a touch screen panel according to Item 6, the composition comprising an inorganic dielectric powder in an amount of 0.01 to 200 parts by mass per 100 parts by mass of the acrylic polymer and having a permittivity of 3 to 10.

Item 8. The pressure-sensitive adhesive composition for a touch screen panel according to Item 6 or 7, wherein the touch screen panel is a capacitive touch screen panel.

Item 9. A pressure-sensitive adhesive sheet for use in a capacitive touch screen panel, comprising the pressure-sensitive adhesive composition for a touch screen panel of Item 6 or 7.

The pressure-sensitive adhesive composition according to the present invention is described in detail.

(1) (a) $C_{1-12}$ hydrocarbon group-containing (meth)acrylic acid ester monomer

The acrylic polymer of the present invention contains (a) a $C_{1-12}$ hydrocarbon group-containing (meth)acrylic acid ester monomer as a monomer component.

Examples of the $C_{1-12}$ hydrocarbon group-containing (meth)acrylic acid ester monomer as component (a) include (meth)acrylic acid alkyl esters, (meth)acrylic acid alkenyl esters, (meth)acrylic acid cycloalkyl esters, (meth) acrylic acid cycloalkenyl esters, (meth)acrylic acid aryl esters, (meth)acrylic acid alkylaryl esters, (meth)acrylic acid aralkyl esters, (meth)acrylic acid alkylaralkyl esters, (meth)acrylic acid aralkylaryl esters, and the like. Among these, (meth)acrylic acid alkyl esters and (meth)acrylic acid cycloalkyl esters are preferable. Particularly preferable are at least one monomer selected from $C_{1-12}$ alkyl-containing (meth)acrylic acid alkyl esters and $C_{5-12}$ cycloalkyl-containing (meth) acrylic acid cycloalkyl esters.

Examples of $C_{1-12}$ hydrocarbon group-containing (meth)acrylic acid alkyl esters include methyl acrylate, methyl methacrylate, ethyl acrylate, ethyl methacrylate, butyl acrylate, butyl methacrylate, iso-butyl acrylate, iso-butyl methacrylate, sec-butyl acrylate, sec-butyl methacrylate, tert-butyl acrylate, tert-butyl methacrylate, propyl acrylate, propyl methacrylate, 2-ethylhexyl acrylate, 2-ethylhexyl methacrylate, octyl acrylate, octyl methacrylate, iso-octyl acrylate, iso-octyl methacrylate, iso-nonyl acrylate, iso-nonyl methacrylate, iso-decyl acrylate, iso-decyl methacrylate, lauryl acrylate, lauryl methacrylate, iso-dodecyl acrylate, iso-dodecyl methacrylate, cyclopentyl acrylate, cyclopentyl methacrylate, cyclohexyl acrylate, cyclohexyl methacrylate, butylcyclohexyl acrylate, butylcyclohexyl methacrylate, dicyclopentanyl acrylate, dicyclopentanyl methacrylate, dicyclopentenyl acrylate, dicyclopentenyl methacrylate, dicyclopentenyloxyethyl acrylate, dicyclopentenyloxyethyl methacrylate, isobornyl acrylate, isoboronyl methacrylate, and the like.

Examples of monomers that are preferably used in the acrylic polymer of the present invention include methyl acrylate, methyl methacrylate, ethyl acrylate, ethyl methacrylate, butyl acrylate, butyl methacrylate, 2-ethylhexyl acrylate, 2-ethylhexyl methacrylate, and the like. These monomers may be used singly or in a combination of two or more that are suitably selected therefrom. Butyl acrylate and 2-ethylhexyl acrylate are particularly preferable in view of imparting, to the polymer, basic viscoelastic properties essential to pressure-sensitive adhesives.

(2) Hydroxy group-containing (meth)acrylic acid ester monomer as component (b)

The acrylic polymer of the present invention comprises (b) a hydroxy group-containing (meth)acrylic acid ester monomer as a monomer component.

Examples of the hydroxy group-containing (meth)acrylic acid ester monomer as component (b) include hydroxyalkyl (meth)acrylate. Specific examples thereof include 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, 4-hydroxybutyl acrylate, 4-hydroxybutyl methacrylate, caprolactone acrylate, caprolactone methacrylate, and like hydroxyalkyl (meth)acrylates, polyoxyethylene (meth)acrylate, polyoxypropylene (meth)acrylate, glycerol (meth)acrylate, and the like. Such compounds can be used singly or in a combination of two or more that are suitably selected therefrom.

The acrylic polymer of the present invention preferably comprises a hydroxy group-containing acrylic acid ester monomer. Because a functional group that functions as a site of reaction with a crosslinking agent can be provided to the polymer and because a crosslinked product obtained by crosslinking the polymer can impart elasticity appropriate as a pressure-sensitive adhesive to increase the cohesive force, as well as increasing the permittivity and contributing to enhance the resistance to moist heat, 2-hydroxyethyl acrylate and 4-hydroxybutyl acrylate are particularly preferable.

(3) (c) Amide group-containing monomer

The acrylic polymer according to the present invention comprises (c) an amide group-containing monomer as a monomer component.

Examples of the amide group-containing monomer as component (c) include acrylamide, methacrylamide, N-methylacrylamide, N-methylmethacrylamide, N-ethylacrylamide, N-ethylmethacrylamide, N-isopropylacrylamide, N-isopropylmethacrylamide, N-butylacrylamide, N-butylmethacrylamide, N,N-dimethylacrylamide, N,N-dimethylmethacrylamide, N,N-diethylacrylamide, N,N-diethylmethacrylamide, N,N-dipropylacrylamide, N,N-dipropylmethacrylamide, N,N-dibutylacrylamide, N,N-dibutylmethacrylamide, N-methyl-N-ethylacrylamide, N-methyl-N-ethylmethacrylamide, N-methyl-N-propylacrylamide, N-methyl-N-propylmethacrylamide, N-methyl-N-butylacrylamide, N-methyl-N-butylmethacrylamide, N-ethyl-N-propylacrylamide, N-ethyl-N-propylmethacrylamide, N-ethyl-N-butylacrylamide, N-ethyl-N-butylmethacrylamide, N-propyl-N-butylacrylamide, N-propyl-N-butylmethacrylamide, N-methylolacrylamide, N-methylolmethacrylamide, N-hydroxyethyl acrylamide, N-hydroxyethyl methacrylamide, N-methoxymethyl acrylamide, N-methoxymethyl methacrylamide, N-butoxymethylacrylamide, N-butoxymethylmethacrylamide, N,N-dimethylaminopropylacrylamide, N,N-dimethylaminopropylmethacrylamide, N-vinylpyrrolidone, N-vinyl-ε-caprolactam, N-vinylformamide, diacetone acrylamide, and methyl (meth)acrylamidoglycolate methyl ether. Such compounds can be used singly or in a combination of two or more that are suitably selected therefrom.

The amide group-containing monomer (c) is preferably a compound represented by Formula (1):

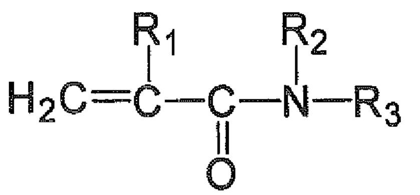
(1)

(wherein $R_1$ is hydrogen or methyl, and $R_2$ and $R_3$ are the same or different and each represents hydrogen or $C_{1-4}$ linear or branched alkyl). Specific examples thereof include acrylamide, methacrylamide, N-methylacrylamide, N-methylmethacrylamide, N-ethylacrylamide, N-ethylmethacrylamide, N-isopropylacrylamide, N-isopropylmethacrylamide, N-butylacrylamide, N-butylmethacrylamide, N,N-dimethylacrylamide, N,N-dimethylmethacrylamide, N,N-diethylacrylamide, N,N-diethylmethacrylamide, N,N-dipropylacrylamide, N,N-dipropylmethacrylamide, N,N-dibutylacrylamide, N,N-dibutylmethacrylamide, N-methyl-N-ethylacrylamide, N-methyl-N-ethylmethacrylamide, N-methyl-N-propylacrylamide, N-methyl-N-propylmethacrylamide, N-methyl-N-butylacrylamide, N-methyl-N-butylmethacrylamide, N-ethyl-N-propylacrylamide, N-ethyl-N-propylmethacrylamide, N-ethyl-N-butylacrylamide, N-ethyl-N-butylmethacrylamide, N-propyl-N-butylacrylamide, and N-propyl-N-butylmethacrylamide.

In the acrylic polymer of the present invention, acrylamide, methacrylamide, N-methylacrylamide, N-methylmethacrylamide, N-ethylacrylamide, N-ethylmethacrylamide, N,N-dimethylacrylamide, N,N-dimethylmethacrylamide, N,N-diethylacrylamide, and N,N-diethylmethacrylamide are preferable because such compounds can increase the permittivity of the polymer, a crosslinked product thereof, or a pressure-sensitive adhesive sheet thereof, enhance adhesion to the adherend, and also contribute to increased resistance of the pressure-sensitive adhesive sheet to moist heat. N,N-dimethylacrylamide, N,N-diethylacrylamide, and N-ethylacrylamide are particularly preferable.

(4)(d) Vinyl ester monomer

The acrylic polymer of the present invention comprises a vinyl ester monomer (d) as a monomer component.

Examples of the vinyl ester monomer include vinyl acetate, vinyl propionate, vinyl butyrate, vinyl valerate, vinyl pivalate, vinyl caproate, vinyl caprate, vinyl 2-ethylhexanoate, vinyl laurate, vinyl myristate, vinyl palmitate, vinyl stearate, vinyl versatate (e.g., VEOVA (trade name), produced by Japan Epoxy Resins Co., Ltd.), vinyl benzoate, and like vinyl carboxylate monomers. Such compounds can be used singly or in a combination of two or more that are suitably selected therefrom.

In the acrylic polymer of the present invention, vinyl acetate is particularly preferable because it can impart cohesive force to the polymer and also contribute to providing a pressure-sensitive adhesive and pressure-sensitive adhesive sheet that can appropriately maintain Tg and various properties of the pressure-sensitive adhesive.

(5) (e) Other monomers

As monomer components other than the above components (a) to (d), the acrylic polymer of the present invention may contain an amino group-containing monomer, an epoxy group-containing monomer, a silyl group-containing monomer, a carbodiimide group-containing monomer, an acetoacetoxy group-containing monomer, a nitrile monomer, a vinyl ether monomer, and the like. Such compounds can be used singly or in a combination of two or more that are suitably selected therefrom.

As the amino group-containing monomer, for example, N,N-dimethylaminoethyl acrylate, N,N-dimethylaminoethyl methacrylate, diallylmethylamine, aminostyrene, vinylpyridine, 1-vinylimidazole, tetramethylpiperidyl acrylate, or tetramethyl piperidyl methacrylate can be suitably selected and used.

As the epoxy-containing monomer, for example, glycidyl (meth)acrylate or 4-hydroxybutyl (meth)acrylate glycidyl ether can be suitably selected and used.

As the silyl group-containing monomer, for example, 3-(meth)acryloyloxypropyltrimethoxysilane, 3-(meth)acryloyloxypropyltriethoxysilane, 3-(meth)acryloyloxypropyldimethoxymethylsilane, or 3-(meth)acryloyloxypropyldiethoxymethylsilane can be suitably selected and used.

As the carbodiimide group-containing monomer, for example, carbodiimide ethyl (meth)acrylate or tert-butyl carbodiimide ethyl (meth)acrylate can be suitably selected and used.

As the acetoacetoxy group-containing monomer, for example, 2-acetoacetoxyethyl (meth)acrylate, 4-acetoacetoxybutyl (meth)acrylate, 2-acetoacetoxyethyl vinyl ether, or 4-acetoacetoxybutyl vinyl ether can be suitably selected and used.

As the nitrile monomer, for example, acrylonitrile or methacrylonitrile can be suitably selected and used.

As the vinyl ether monomer, for example, n-propylvinyl ether, isopropylvinyl ether, n-butylvinyl ether, isobutylvinyl ether, 2-ethylhexylvinyl ether, cyclohexylvinyl ether, 2-hydroxyethylvinyl ether, diethyleneglycol monovinyl ether, 4-hydroxybutyl vinyl ether, cyclohexane dimethanol monovinyl ether, 1,4-butanediol divinyl ether, cyclohexane dimethanol divinyl ether, or diethylene glycol divinyl ether can be suitably selected and used.

Other compounds can also be suitably selected and used, such as tetrahydrofurfuryl (meth)acrylate, methoxyethyl (meth)acrylate, benzyl (meth)acrylate, phenoxyethyl (meth)acrylate, 2-hydroxy-3-phenoxypropyl (meth)acrylate, styrene, α-methylstyrene, ethylene glycol di(meth)acrylate, polyethylene glycol di(meth)acrylate, propylene glycol di (meth)acrylate, polypropylene glycol di(meth)acrylate, butanediol di(meth)acrylate, hexanediol di(meth)acrylate, N,N'-methylene bisacrylamide, divinylbenzene, cyclohexylmaleimide, isopropylmaleimide, polyoxyalkylene (meth)acrylate, 2-chloroethyl acrylate, isotridecyl acrylate, isotridecyl methacrylate, myristyl acrylate, myristyl methacrylate, cetyl acrylate, cetyl methacrylate, stearyl acrylate, stearyl methacrylate, isooctadecyl acrylate, isooctadecyl methacrylate, oleyl acrylate, oleyl methacrylate, icosyl acrylate, and icosyl methacrylate.

(6) Ratio of components (a) to (e)

The ratio of the monomer components that form the acrylic polymer of the present invention is preferably such that the content of $C_{1-12}$ hydrocarbon group-containing (meth)acrylic acid ester monomer (a) is 60 to 95 mass%, the content of hydroxy group-containing (meth)acrylic acid ester monomer (b) is 0.1 to 20 mass%, the content of amide group-containing monomer (c) is 0.1 to 30 mass%, and the content of vinyl ester monomer (d) is 0.1 to 10 mass%. These components are hereinafter referred to as "component (a)", "component (b)", "component (c)", "component (d)", and "component (e)".

(6-1) Content of component (a)

The content of component (a) is preferably 60 to 95 mass%, and more preferably 65 to 95 mass%, in view of

imparting, to the polymer, basic viscoelastic properties essential to pressure-sensitive adhesives.

(6-2) Content of component (b)

A content of component (b) of less than 0.1 mass% is not preferable because a functional group that functions as a site for reaction with a crosslinking agent cannot be sufficiently provided to the polymer, and a crosslinked product obtained by crosslinking the polymer does not have elasticity and cohesive force appropriate as a pressure-sensitive adhesive, as well as the component (b) failing to contribute to enhanced resistance to moist heat, and resulting in a low permittivity. On the other hand, a content of component (b) of more than 20 mass% is not preferable because it increases resin viscosity and reduces work efficiency during coating using a coater, etc. Accordingly, the content of component (b) is preferably 0.1 to 20 mass%, and more preferably 1 to 15 mass%.

(6-3) Content of component (c)

A content of component (c) of less than 0.1 mass% is not preferable because it causes insufficient adhesion to a transparent conductive film or various adherends, fails to impart high moist heat resistance to a pressure-sensitive adhesive sheet, and results in difficulty in imparting a desired permittivity to the polymer, a crosslinked product thereof, or a pressure-sensitive adhesive sheet thereof. On the other hand, a content of component (c) of more than 30 mass% is not preferable because a polymer that has viscosity and molecular weight within preferable ranges cannot be obtained. Accordingly, the content of component (c) is preferably 0.1 to 30 mass%, and more preferably 2 to 25 mass%.

(6-4) Content of component (d)

A content of component (d) of less than 0.1 mass% is not preferable because it fails to impart sufficient cohesive force to the polymer and cannot contribute to providing a pressure-sensitive adhesive or pressure-sensitive adhesive sheet that can appropriately maintain Tg and physical properties of the pressure-sensitive adhesive. On the other hand, a content of component (d) of more than 10 mass% is not preferable because adhesion performance itself declines, thus failing to obtain physical properties that meet the object of the invention. Accordingly, the content of component (d) is preferably 0.1 to 10 mass%, and more preferably 1 to 5 mass%.

(7) Weight-average molecular weight

The acrylic polymer obtained by copolymerizing monomer components including components (a) to (d) according to the present invention has a weight-average molecular weight of 400,000 ($40x10^4$) to 2,000,000 ($200x10^4$), and preferably 600,000 ($60x10^4$) to 1,500,000 ($150x10^4$). An excessively low weight-average molecular weight reduces durability, such as heat resistance and adhesion, and is thus not preferable. On the other hand, an excessively high weight-average molecular weight causes high resin viscosity and poor coatability, and the resulting product is unsuitable as an industrial product. Accordingly, the weight-average molecular weight is in the range of 400,000 ($40x10^4$) to 2,000,000 ($200x10^4$), and preferably 600,000 ($60x10^4$) to 1,500,000 ($150x10^4$).

The weight-average molecular weight is measured by GPC (gel permeation chromatography). Two polymers, one of which has a lower molecular weight and the other of which has a higher molecular weight within the above-mentioned range, may be prepared separately, and these two polymers or more may be blended and used.

(8) Acid value of the resin

The acrylic polymer obtained by copolymerizing monomer components including components (a) to (d) according to the present invention has a resin acid value of 0.1 mg KOH/g or less.

An acrylic polymer having a resin acid value of 0.1 mg KOH/g or less means that the polymer obtained by copolymerization substantially contains no carboxy groups. The phrase "substantially contains no carboxy groups" means that carboxy groups are not intentionally incorporated but might be contained unavoidably. This is because if carboxy groups were contained in the pressure-sensitive adhesive resin composition of the present invention, the resulting pressure-sensitive adhesive would become more corrosive to metal oxide films, such as ITO, and to metallic thin films.

The resin acid value (AV) is determined according to JIS K0070 in the following manner. Ten grams (A) of the pressure-sensitive adhesive composition from which the solvent had been removed was precisely weighed and dissolved in 100 ml of tetrahydrofuran. A phenolphthalein solution was added as an indicator to the obtained sample solution, and a 0.1N KOH ethanol solution (factor: f) was added until the resin solution turned pink (B ml). The resin acid value was calculated by using the following equation.

$$AV\ (mg\ KOH/g) = B \times f \times 5.611/A$$

(9) Tg (glass transition temperature)

The acrylic polymer obtained by copolymerizing monomer components (a) to (d) preferably has a Tg of -80 to 0°C. A Tg of more than 0°C cannot provide pressure-sensitive adhesive strength appropriate as a pressure-sensitive adhesive and particularly reduces gap-filling ability. On the other hand, a Tg of less than -80°C causes problems in durability, such as heat resistance.

Tg refers to a temperature at which a phase transition occurs from a crystalline state to an amorphous state when energy is provided to the high molecular substance. The Tg of the copolymer is calculated from Tg of the polymer produced from each monomer according to the following equation.

$$\begin{aligned} Tg(^\circ C) = 1 / [&a2 / 100 / (273 + a1) \\ &+ b2 / 100 / (273 + b1) \\ &+ c2 / 100 / (273 + c1) \\ &+ d2 / 100 / (273 + d1)] - 273 \end{aligned}$$

In the above equation,
a1 = Tg(°C) of monomer A, a2 = content of monomer A (mass%),
b1 = Tg(°C) of monomer B, b2 = content of monomer B (mass%),
c1 = Tg(°C) of monomer C, c2 = content of monomer C (mass%),
d1 = Tg(°C) of monomer D, d2 = content of monomer D (mass%), provided, however, that a2 + b2 + c2 + d2 = 100.

(10) Permittivity of the acrylic polymer

The permittivity of the pressure-sensitive adhesive composition for a screen panel according to the present invention can be determined by forming a test piece by applying the pressure-sensitive adhesive composition onto a release film (separator), releasing the release film from the test piece, and measuring the permittivity using a 4291B impedance measuring device produced by Hewlett-Packard Japan, Ltd.

In capacitive touch screen panels, sensitivity (responsiveness) when the touch screen panel is touched with a fingertip, etc., is important.

Commonly used pressure-sensitive adhesive s or pressure-sensitive adhesive sheets have a low permittivity of about 2 to 2.7, which causes low sensitivity (responsiveness) when the touch screen panel is touched with a fingertip, etc. In particular, because thickening the pressure-sensitive adhesive layer is a recent trend, reduced responsiveness has been increasinly pointed out, and increased permittivity of pressure-sensitive adhesive s and pressure-sensitive adhesive sheets has been desired.

As a result of extensive research, the present inventors succeeded in increasing permittivity by using an acrylic polymer wherein the ratio of the monomer components forming the acrylic polymer is that the content of $C_{1-12}$ hydrocarbon group-containing (meth)acrylic acid ester monomer (a) is 60 to 95 mass%, the content of hydroxy group-containing (meth)acrylic acid ester monomer (b) is 0.1 to 20 mass%, the content of amide group-containing monomer (c) is 0.1 to 30 mass%, and the content of vinyl ester monomer (d) is 0.1 to 10 mass%.

The acrylic polymer of the present invention has a permittivity of 3 to 6 in view of enhancing the sensitivity (responsiveness) of touch screen panels.

To increase the permittivity, various types of dielectrics, etc., may be incorporated into the pressure-sensitive adhesive composition at any proportion.

(11) Method for producing the pressure-sensitive adhesive composition for a touch screen panel

The acrylic polymer of the present invention can be produced by a commonly known polymerization method. Although bulk polymerization, suspension polymerization, emulsion polymerization, photopolymerization, etc., may be used, a solution polymerization method using a solvent is preferably used for copolymerization to obtain the polymer. The polymerization temperature is typically about 30 to 100°C, and preferably about 50 to 80°C.

(11-1) Solvent

The solvent used for dilution during or after the polymerization is not particularly limited and can be suitably selected. Examples of usable solvents include organic solvents such as methyl acetate, ethyl acetate, butyl acetate, benzene, toluene, xylene, acetone, methyl ethyl ketone, methyl isobutyl ketone, cyclohexanone, N-hexane, isopropyl alcohol, n-butanol, propylene glycol monomethyl ether, propylene glycol dimethyl ether, propylene glycol monomethyl ether acetate, and propylene carbonate. However, solvents other than the above-mentioned solvents may also be used. Two or more solvents may be used in combination. Examples of particularly preferable solvents include ethyl acetate, butyl acetate, toluene, methyl ethyl ketone, methyl isobutyl ketone, cyclohexanone, n-hexane, and propylene glycol monomethyl ether acetate.

(11-2) Polymerization initiator

The polymerization initiator is not particularly limited. Examples of usable polymerization initiators include azo compounds such as 2,2'-azobisisobutyronitrile, 2,2'-azobis(4-methoxy-2,4-dimethylvaleronitrile), 2,2'-azobis(2,4-dimethylvaleronitrile), dimethyl-2,2'-azobis(2-methylpropionate), 2,2'-azobis(2-methylbutyronitrile), 1,1'-azobis(cyclohexane-1-carbonitrile), 2,2'-azobis[N-(2-propenyl)-2-methoxypropionamide], 1-[(1-cyano-1-methylethyl)azo]formamide, 2,2'-azobis(N-butyl-2-methylpropionamide), 2,2'-azobis(N-cyclohexyl-2-methylpropionamide), and [1,1'-azobis(1-acetoxy-1-phenylethane)]; and organic oxide compounds such as lauroyl peroxide, octanoyl peroxide, benzoyl peroxide, ethyl methyl ketone peroxide, cumene hydroperoxide, dicumyl peroxide, t-butyl hydroperoxide, cumyl peroxyneodecanoate, t-hexyl peroxyneodecanoate, t-butylperoxy-2-ethylhexanoate, dicumyl peroxide, isobutyl peroxide, di-t-butyl peroxide, t-butylcumyl peroxide; t-butylperoxy benzoate, 2,5-dimethyl-2,5-di(t-butylperoxy)hexane, di(2-ethylhexyl)peroxydicarbonate, 1,1-bis(t-butylperoxy)-3,3,5-trimethylcyclohexane, and 3,3,5-trimethylcyclohexanoyl peroxide.

Peroxide compounds can be subjected to redox polymerization by additionally using a reducing agent, such as N,N-dimethyltoluidine or N,N-diethyltoluidine.

Peroxide initiators, such as lauroyl peroxide, octanoyl peroxide, benzoyl peroxide, ethyl methyl ketone peroxide, cumyl peroxyneodecanoate, t-hexyl peroxyneodecanoate, t-butylperoxy-2-ethylhexanoate, dicumyl peroxide, isobutyl peroxide, t-butylperoxy benzoate, di(2-ethylhexyl)peroxydicarbonate, and 3,3,5-trimethylcyclohexanoyl peroxide, may generate an acid component, such as a carboxy group, in decomposition products thereof or initiator fragments thereof, which may corrode transparent conductive films, such as ITO. Therefore, although a small amount of peroxide initiators may be used together with other initiators, no use of such peroxide initiators is preferable.

The polymerization initiator is preferably used in an amount of 0.01 to 2.0 wt.%, based on the total weight of monomer components (a) to (d) (or components (a) to (e)) that form the acrylic polymer.

Although the molecular weight of the copolymer can be controlled by the type and amount of polymerization initiator used, the polymerization temperature, the monomer concentration, and the like, it is possible to use mercaptans, halocarbons, halogenated hydrocarbons, or the like as a chain transfer agent, if necessary.

(11-3) Crosslinking agent

As the crosslinking agent that crosslinks with the acrylic polymer of the present invention, isocyanate crosslinking agents are suitable for use. Preferable examples thereof include aromatic isocyanates such as tolylene diisocyanate, 4,4'-diphenylmethane diisocyanate, xylylene diisocyanate, naphthalene diisocyanate, and p-phenylene diisocyanate; aliphatic isocyanates such as tetramethylene diisocyanate, hexamethylene diisocyanate, norbornene diisocyanate, and dicyclohexylmethane diisocyanate; and alicyclic isocyanates such as isophorone diisocyanate, hydrogenated xylene diisocyanate, and like hydrogenated products of the above-mentioned aromatic diisocyanates. These isocyanate crosslinking agents include multifunctional polyisocyanates such as adducts, isocyanurates, and biurets of the aforementioned compounds; and reactive substances such as polymethylene polyphenyl polyisocyanates, polyester polyisocyanate, polyether polyisocyanate, and trimethylolpropane-modified polyisocyanate. Such compounds can be used singly or in a combination of two or more. Among these, adducts are particularly preferable, and a blend thereof with a suitable amount of an aromatic isocyanate is even more preferable.

Crosslinking agents other than isocyanates can also be used. For example, epoxy, epoxysilane, hydrazide, carbodiimide, aziridine, or organometallic (such as titanium) crosslinking agents are preferably used.

Examples of epoxy crosslinking agents that can be preferably used include ethylene glycol diglycidyl ether, polyethylene glycol diglycidyl ether, propylene glycol diglycidyl ether, polypropylene glycol diglycidyl ether, glycerol diglycidyl ether, polyglycerol polyglycidyl ether, diglycidyl aniline, terephthalic acid diglycidyl ester, 1,3-bis(N,N-diglycidylaminomethyl)cyclohexane, N,N,N',N'-tetraglycidyl-m-xylylenediamine, N,N,N',N'-tetraglycidylaminophenylmethane, m-N,N-diglycidyl diaminophenyl glycidyl ether, N,N-diglycidyl toluidine, N,N-diglycidyl trianiline, pentaerythritol polyglycidyl ether, 1,6-hexanediol diglycidyl ether, resorcinol diglycidyl ether, neopentyl glycol diglycidyl ether, sorbitol polyglycidyl ether, sorbitan polyglycidyl ether, hydrogenated bisphenol A diglycidyl ether, glycerol polyglycidyl ether, diglycerol polyglycidyl ether, trimethylolpropane oxyglycidyl ether, polyglycerol polyglycidyl ether, and the like.

Examples of epoxysilane crosslinking agents that can be preferably used include γ-glycidoxypropyltrimethoxysilane, γ-glycidoxypropyltriethoxysilane, γ-glycidoxypropyldimethoxymethylsilane, γ-glycidoxypropyldiethoxymethylsilane, β-(3,4-epoxycyclohexyl)ethyltrimethoxysilane, β-(3,4-epoxycyclohexyl)ethyltriethoxysilane, and the like.

Examples of aminosilane crosslinking agents that can be preferably used include 3-aminopropyltrimethoxysilane, 3-aminopropyltriethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, and N-phenyl-3-aminopropyltrimethoxysilane.

Examples of mercaptosilane crosslinking agents that can be preferably used include γ-mercaptopropyl trimethoxysilane, γ-mercaptopropyl methyldimethoxymethylsilane, and the like.

As an isocyanatesilane crosslinking agent, γ-isocyanatepropyltriethoxysilane is preferably used.

As an epoxy isocyanurate crosslinking agent, triglycidyl isocyanurate is preferably used.

Examples of hydrazide crosslinking agents that can be preferably used include carbodihydrazide, oxalic dihydrazide, adipic dihydrazide, sebacic dihydrazide, isophthalic dihydrazide, and the like.

Examples of aziridine (ethyleneimino group-containing compound) crosslinking agents that can be preferably used include semicarbazide resins, polycarbodiimide resins, tetramethylolmethane-tris(β-aziridinylpropionate), trimethylolpropane-tris(β-aziridinylpropionate), methylenebis[N-(1-aziridinylcarbonyl)-4-aniline], N,N'-hexamethylenebis(1-aziridinecarboamide), and the like.

Crosslinking agents such as acetoacetoxy group-containing compounds, oxazoline group-containing compounds, polyethylene polyamine, polyethylene imine, polyamide polyamine, polyamide polyurea, alkylated polymethylol melamine, and glyoxal are preferably used.

One or more such crosslinking agents may be used together with an isocyanate crosslinking agent, if necessary. In particular, epoxy or silane crosslinking agents are preferable. When the adherend is a glass, the use of a silane crosslinking agent in combination with an isocyanate crosslinking agent is particularly effective.

Although not particularly limited, the amount of crosslinking agent used is 0.001 to 4.0 mass%, and preferably 0.01 to 0.5 mass%, based on the total mass of the polymer (the total mass of monomer components (a) to (d) (or monomer components (a) to (e)) that form the acrylic polymer). Using a crosslinking agent in an amount of less than 0.01 mass% is not preferable because holding force (thermal creep resistance) is reduced. On the other hand, using a crosslinking agent in an amount of more than 0.5 mass% is not preferable because it reduces pressure-sensitive adhesive strength and allows a crosslinking reaction to proceed in a short period of time, thus resulting in a short pot life.

The pressure-sensitive adhesive composition for a touch screen panel can be produced by adding a crosslinking agent that crosslinks with the acrylic polymer of the present invention.

(11-4) Other ingredients

The resin composition of the present invention may further contain other ingredients such as inorganic dielectric powders, tackifiers, antistatic agents, inorganic fillers, leveling agents, antioxidants, age resisters, UV absorbers, light stabilizers, plasticizers, viscosity modifiers, antibacterial agents, antimicrobial agents, colorants, and the like.

Examples of inorganic dielectric powders include powders of titanium oxide, barium oxide, barium titanate, zinc oxide, tin oxide, zirconium oxide, silicon oxide, cerium oxide, lead oxide, chromium oxide, copper oxide, iron oxide, aluminum oxide, antimony oxide, antimony-doped tin oxide, barium sulfate, barium carbonate, lead carbonate, lead sulfate, lead nitrate, glass, graphite, carbon, semiconductor materials, and metals.

Such an inorganic dielectric powder can further increase the permittivity of pressure-sensitive adhesives, cured products thereof, and pressure-sensitive adhesive sheets, and is effective when a particularly high permittivity is required.

Because the pressure-sensitive adhesive composition for a touch screen panel comprising the acrylic polymer of the present invention is used for optical purposes, it is preferably colorless. To prevent the corrosion of transparent conductive coating films, such as ITO, and of circuits, an inorganic dielectric fine powder with high safety that does not release ions is preferably used.

Examples of inorganic dielectrics preferable from this viewpoint include titanium oxide, barium oxide, barium titanate, zinc oxide, zirconium oxide, tin oxide, aluminium oxide, barium sulfate, and glass.

The powder is preferably a fine particle in view of transparency (total light transmittance and haze). The powder preferably has an average particle size of 100 nm or less, and more preferably 50 nm or less. When the average particle size is more than 100 nm, the powder has lower transparency and thus may be unsuitable for this type of application. Although the lower limit is not particularly limited, it is difficult to obtain particles with an average particle size of 1 nm or less due to technological restrictions on the production of fine particles. The shape of the particles is not necessarily spherical and may be needle-like, tabular, conical, amorphous, etc.

The organic dielectric powder is added to the acrylic polymer of the present invention, as desired. To obtain the desired permittivity, the inorganic dielectric powder is preferably added in an amount of 0.01 to 200 mass parts per

100 mass parts of the acrylic polymer. When the amount of the inorganic dielectric powder is less than 0.01 mass parts, the desired permittivity may not be obtained. When the amount of the inorganic dielectric powder is more than 200 mass parts, transparency and various desirable physical properties as pressure-sensitive adhesives cannot be obtained, which is unsuitable. When the relationship between the powder particle diameter and transparency should be taken into consideration, the inorganic dielectric powder is preferably added in an amount of 0.01 to 50 mass parts.

Examples of tackifiers include rosin tackifiers, terpene tackifiers, phenolic resin tackifiers, xylene resin tackifiers, styrene resin tackifiers, cumarone indene resin tackifiers, petroleum resin tackifiers, and the like. Examples of rosin tackifiers include rosin itself comprising abietic acid as a main ingredient, and derivatives thereof. Specific examples thereof include disproportionated rosin, hydrogenated rosin, maleated rosin, polymerized rosin, formaldehyde modified rosin, and esterified products (e.g., glycerol esterified products).

Because tackifiers containing an acid component, such as a carboxy group, might corrode transparent conducting layers, such as ITO, it is preferable to avoid the use of such tackifiers.

(11-5) Permittivity of the pressure-sensitive adhesive composition for a touch screen panel

When the pressure-sensitive adhesive composition for a touch screen panel comprises an inorganic dielectric powder in addition to the acrylic polymer, the composition having a higher permittivity is preferable from the viewpoint of the responsiveness of the capacitive touch screen panel. However, in view of the relationship with materials actually used to form a touchscreen-panel module, permittivity higher than a certain level is unnecessary, and the pressure-sensitive adhesive composition preferably has a permittivity of 3 to 10, and more preferably 5 to 10.

(12) Preparation of the pressure-sensitive adhesive sheet

The pressure-sensitive adhesive composition of the present invention may be directly applied to a sheet or film substrate without dilution or after being diluted with an organic solvent exemplified above as a solvent used in the polymerization, and then dried by heating. The coating film thickness after drying is preferably 5 to 1,000 $\mu$m, and preferably about 20 to 500 $\mu$m. Examples of substrate materials include glass, polyester (PET), acrylic (PMMA), polycarbonate (PC), and cycloolefin (COP).

The pressure-sensitive adhesive composition of the present invention can be used by directly applying the composition to various optical film substrates, or used as a double-sided pressure-sensitive adhesive sheet obtained by applying the composition to a release film and drying by heating. In the latter case, the double-sided pressure-sensitive adhesive sheet can be produced, for example, by a method comprising applying the pressure-sensitive adhesive to a release film, drying by heating to remove a solvent, etc., allowing a crosslinking reaction to proceed to form a pressure-sensitive adhesive layer, and spirally winding the resulting product to form a roll. Alternatively, it can be produced by a method comprising applying the pressure-sensitive adhesive composition to a release film, drying by heating, further bonding another release film thereto so as to interpose the pressure-sensitive adhesive layer between two release films, and spirally winding the resulting product to form a roll. As such release films, it is possible to use resin films such as PET films, olefin films, or the like which are surface-treated with melamine, silicone, or the like, release papers such as glassine paper, coated paper, laminated paper, or the like which are surface-treated with silicone, releasable acrylic resin, or the like. In particular, resin films such as PET films are preferable. Further, release films may be subjected to back coating to prevent adhesion, etc., or may be imparted with antistatic properties. Because high transparency is required for this purpose of use, double-sided pressure-sensitive adhesive sheets obtained by applying or impregnating the pressure-sensitive adhesive to both sides of a resin film or nonwoven fabric are less suitable. Instead of application to a release film, the pressure-sensitive adhesive composition may be directly applied to various optical sheets or film substrates and dried, and then another optical sheet or film may be attached thereto.

The method for applying the film-forming liquid can be suitably selected from known methods, such as die coaters, lip coaters, reverse roll coaters, kiss roll coaters, comma roll coaters, dip roll coaters, gravure roll coaters, bar coaters, blade knife coaters, air-knife coaters, curtain coaters, spin coaters, and spray coaters.

The drying conditions after application of the pressure-sensitive adhesive composition are not particularly limited and can be suitably set according to type and amount of solvent or crosslinking agent used, and type of substrate sheet or film. Generally, the drying is preferably performed at 60 to 150°C for about 0.5 to 10 minutes.

To increase the film thickness, the pressure-sensitive adhesive layer that forms a pressure-sensitive adhesive sheet may be composed of a plurality of layers superposed on one after another. Such layers may be formed by repeating the application of a pressure-sensitive adhesive onto a substrate sheet and drying.

The obtained pressure-sensitive adhesive sheet can be used in the following manner or for the following purposes. The pressure-sensitive adhesive sheet is first bonded to a transparent conductive film, such as ITO (indium tin oxide) or ATO (antimony tin oxide), or to a circuit formed by etching such a transparent conductive film, or to a sheet or film of a resin (PET, PMMA, PC, COP, etc.) or a glass having fine wiring of a metal, such as silver, copper, or aluminum,

formed thereon, and then further bonded to another sheet or film, thereby bonding two substrates together. For example, the pressure-sensitive adhesive surface of the pressure-sensitive adhesive sheet of the present invention is bonded to a glass having a circuit formed thereon by etching or the like after sputtering ITO. After a release film is removed from the pressure-sensitive adhesive sheet, a UV-curable resin-hard-coated PET film is bonded to the pressure-sensitive adhesive sheet. Alternatively, the pressure-sensitive adhesive sheet of the present invention is bonded to a surface-treated PET film having a circuit formed thereon by etching or the like after sputtering ITO. After a release film is removed from the pressure-sensitive adhesive sheet, another PET film is attached to the pressure-sensitive adhesive sheet. Alternatively, after the pressure-sensitive adhesive composition is directly applied to an optical film and dried, another optical film is attached thereto. Alternatively, the pressure-sensitive adhesive composition or pressure-sensitive adhesive sheet is used to bond an ITO-patterned resin sheet or film, glass, or the like, to another optical member (e.g., a polarizing plate (TAC, COP, etc.) or a liquid crystal cell (glass)). The pressure-sensitive adhesive composition or pressure-sensitive adhesive sheet is widely used to bond together sheet-shaped or film-shaped optical members that form a touch screen panel. There is no particular limitation on the type of adherend to which the pressure-sensitive adhesive or the pressure-sensitive adhesive sheet is applied.

ITO is composed of indium oxide and tin oxide. Examples of ITO include amorphous ITO and crystalline ITO; however, the type of ITO is not limited. The surface of ITO may further have a thin sputtered silicon oxide or like film. Examples of transparent conductive films include, in addition to ITO, zinc oxide, tin oxide, titanium oxide, and compounds formed by adding thereto aluminium oxide, gallium oxide, antimony oxide, niobium oxide, fluorine, or the like. Such a transparent conductive film can be formed on the target sheet or film surface by sputtering, vacuum evaporation, ion plating, sol-gel, or like techniques.

The touch screen panel is used as a display (image display device) of various display instruments, such as cellular phones, personal computers, hand-held gaming devices, ATMs, ticket vending machines, signage, electronic books, and electronic paper. The pressure-sensitive adhesive or pressure-sensitive adhesive sheet of the present invention is used to bond together optical members that form a display as exemplified above. The pressure-sensitive adhesive and pressure-sensitive adhesive sheet of the present invention are suitable for use in the following types of displays: FDP (flat panel display), LCD (liquid crystal display), PDP (plasma display), and OLED (organic electroluminescence display); however, they can also be used for other displays, such as CRT (cathode ray tube) displays.

(13) Capacitive touch screen panel

The electrostatic capacitive touch screen panel (capacitive touch screen panel) has a structure in which the pressure-sensitive adhesive is in direct contact with a transparent conductive film. Accordingly, resin components or other components of the pressure-sensitive adhesive may corrode the transparent conductive film.

The pressure-sensitive adhesive composition and pressure-sensitive adhesive sheet for a touch screen panel according to the present invention contain an acrylic polymer that contains substantially no carboxy groups. Therefore, the pressure-sensitive adhesive composition and pressure-sensitive adhesive sheet have no risk of corroding a transparent conductive film, and thus exhibit particularly excellent properties, compared to other pressure-sensitive adhesive s and pressure-sensitive adhesive sheets.

Recently, to improve product design and create product differentiation, a print layer is often provided on a protective transparent plate. Thus, a substrate sheet or film often has an uneven surface with a level different of about 10 to 30 μm, for example, at a printing ink layer, at a silver paste layer formed on various types of circuits, or at an FPD portion. This causes bubble generation when the surface is bonded using the pressure-sensitive adhesive sheet. This problem is attributable to the pressure-sensitive adhesive layer's insufficient gap-filling ability. Among the pressure-sensitive adhesive properties of the pressure-sensitive adhesive sheet produced using the pressure-sensitive adhesive composition, gap-filling ability closely relates to the appropriate Tg and gel fraction. The pressure-sensitive adhesive preferably has a gel fraction of about 30 to 70%, and more preferably about 40 to 65%. A gel fraction is less than 30% may result in reduced cohesive force, or reduced holding force in a heat-resistance test. On the other hand, a gel fraction of more than 70% causes pressure-sensitive adhesive strength to decrease and bubbles to be generated after bonding the pressure-sensitive adhesive sheet. The gel fraction can be adjusted by the molecular weight of the pressure-sensitive adhesive composition and the amount of crosslinking agent used. Balancing these is also important.

Touch screen panels are increasingly used in various devices in various environments. In particular, in a high-temperature and high-humidity environment, it is difficult for water molecules to permeate through conventional pressure-sensitive adhesives or pressure-sensitive adhesive sheets. The water that has entered is localized at the interface between the pressure-sensitive adhesive layer and the adherend, and causes turbidity and whitening of the pressure-sensitive adhesive layer, thus reducing the transparency of the display. When the acrylic polymer of the present invention is used, water that has entered the interface between the pressure-sensitive adhesive layer and various substrates can easily permeate through the pressure-sensitive adhesive layer, thus preventing water from being localized at the interface and remarkably improving the resistance to moist heat. Furthermore, even when the pressure-sensitive

adhesive layer is whitened due to the water contained therein, the water is released in a short time by allowing the display to stand at room temperature and low humidity, and thus restoring the original high transparency.

Advantageous Effects of Invention

The present invention can provide an acrylic polymer for use in a pressure-sensitive adhesive composition for a touch screen panel that is excellent in terms of transparency, adhesion, durability, non-corrosiveness, gap-filling ability, high permittivity, and coatability, and that contains substantially no carboxy groups. The present invention can also provide a pressure-sensitive adhesive composition for a touch screen panel comprising the acrylic polymer, and a pressure-sensitive adhesive sheet comprising the acrylic polymer.

Brief Description of Drawings

[Fig. 1]
Fig. 1 illustrates an example configuration of the touch screen panel.

(a) a cover glass or PET film,
(b) a pressure-sensitive adhesive,
(c) an ITO transparent conductive film,
(d) a substrate,
(e) an ITO transparent conductive film,
(f) a pressure-sensitive adhesive,
(g) a back glass or PET film,
(h) a frame or bezel

As shown in Fig. 1, the pressure-sensitive adhesive of the present invention is configured to fix a cover glass or a rear glass onto an ITO pattern (an ITO transparent conductive film) formed on a substrate, through the pressure-sensitive adhesive or a pressure-sensitive adhesive sheet comprising the pressure-sensitive adhesive.

Description of Embodiments

The pressure-sensitive adhesive composition and the pressure-sensitive adhesive sheet of the present invention are described below more specifically with reference to Examples and Comparative Examples. However, the present invention is not limited thereto or thereby. In the Examples and Comparative Examples, the percentages used are by mass.

Examples

Production Example 1

89 mass parts of butyl acrylate, 5 mass parts of 2-hydroxyethyl acrylate, 5 mass parts of acrylamide, 1 mass part of vinyl acetate, 150 mass parts of ethyl acetate, and 0.5 mass parts of 2,2'-azobisisobutyronitrile were placed into a separable flask equipped with a condenser, a nitrogen inlet tube, a thermometer, a stirrer, and a dropping funnel. While the mixture was stirred, the temperature was raised to 68°C in a nitrogen atmosphere, and a polymerization reaction was allowed to proceed for 5 hours. After dropwise addition of a monomer mixture, the temperature was raised to 85°C and stirring was continued for 3 hours, after which the mixture was cooled to 30°C. The copolymer solution thus obtained had a non-volatile content of 40.5%, a viscosity of 3,200 mPa·s, and a weight-average molecular weight of 900,000 ($90x10^4$).

Production Example 2

A polymerization reaction was carried out in the same manner as in Production Example 1 except that the monomer composition was changed as shown in Table 1. The obtained copolymer solution had a non-volatile content of 41.3%, a viscosity of 7,800 mPa·s, and a weight-average molecular weight of 1,000,000 ($100x10^4$).

Production Example 3

A polymerization reaction was carried out in the same manner as in Production Example 1 except that the monomer composition was changed as shown in Table 1. The obtained copolymer solution had a non-volatile content of 39.8%, a viscosity of 5,000 mPa·s, and a weight-average molecular weight of 1,300,000 ($130 x 10^4$).

Production Example 4

A polymerization reaction was carried out in the same manner as in Production Example 1 except that the monomer composition was changed as shown in Table 1. The obtained copolymer solution had a non-volatile content of 42.7%, a viscosity of 3,000 mPa·s, and a weight-average molecular weight of 1,250,000 ($125 x 10^4$).

Production Example 5

A polymerization reaction was carried out in the same manner as in Production Example 1 except that the monomer composition was changed as shown in Table 1. The obtained copolymer solution had a non-volatile content of 40.0%, a viscosity of 7,200 mPa·s, and a weight-average molecular weight of 1,050,000 ($105 x 10^4$).

Production Example 6

A polymerization reaction was carried out in the same manner as in Production Example 1 except that the monomer composition was changed as shown in Table 1. The obtained copolymer solution had a non-volatile content of 40.0%, a viscosity of 3,500 mPa·s, and a weight-average molecular weight of 1,450,000 ($145 x 10^4$).

Production Example 7

A polymerization reaction was carried out in the same manner as in Production Example 1 except that the monomer composition was changed as shown in Table 1. The obtained copolymer solution had a non-volatile content of 39.4%, a viscosity of 6,000 mPa·s, and a weight-average molecular weight of 990,000 ($99 x 10^4$).

Production Example 8

A polymerization reaction was carried out in the same manner as in Production Example 1 except that the monomer composition was changed as shown in Table 1 and that 135 parts by mass of ethyl acetate and 15 parts of toluene were used in place of 150 parts of ethyl acetate. The obtained copolymer solution had a non-volatile content of 41.3%, a viscosity of 4,000 mPa·s, and a weight-average molecular weight of 750,000 ($75 x 10^4$).

Production Example 9

A polymerization reaction was carried out in the same manner as in Production Example 1 except that the monomer composition was changed as shown in Table 1. The obtained copolymer solution had a non-volatile content of 40.7%, a viscosity of 5,000 mPa·s, and a weight-average molecular weight of 1,300,000 ($130 x 10^4$).

Production Example 10

A polymerization reaction was carried out in the same manner as in Production Example 1 except that the monomer composition was changed as shown in Table 1. The obtained copolymer solution had a non-volatile content of 40.7%, a viscosity of 3,400 mPa·s, and a weight-average molecular weight of 1,000,000 ($100 x 10^4$).

Production Example 11

A polymerization reaction was carried out in the same manner as in Production Example 1 except that the monomer composition was changed as shown in Table 1. The obtained copolymer solution had a non-volatile content of 40.3%, a viscosity of 2,800 mPa·s, and a weight-average molecular weight of 1,200,000 ($120 x 10^4$).

Production Example 12

A polymerization reaction was carried out in the same manner as in Production Example 1 except that the

monomer composition was changed as shown in Table 1. The obtained copolymer solution had a non-volatile content of 41.0%, a viscosity of 3,300 mPa·s, and a weight-average molecular weight of 1,200,000 (120x$10^4$).

Comparative Production Example 1

A polymerization reaction was carried out in the same manner as in Production Example 1 except that the monomer composition was changed as shown in Table 2. The obtained copolymer solution had a non-volatile content of 41.1%, a viscosity of 8,200 mPa·s, and a weight-average molecular weight of 1,300,000 (130x$10^4$).

Comparative Production Example 2

A polymerization reaction was carried out in the same manner as in Production Example 1 except that the monomer composition was changed as shown in Table 2. The obtained copolymer solution had a non-volatile content of 40.9%, a viscosity of 2,100 mPa·s, and a weight-average molecular weight of 150,000 (15x$10^4$).

Comparative Production Example 3

A polymerization reaction was carried out in the same manner as in Production Example 1 except that the monomer composition was changed as shown in Table 2. The obtained copolymer solution had a non-volatile content of 39.0%, a viscosity of 5,000 mPa·s, and a weight-average molecular weight of 1,000,000 (100x$10^4$).

Comparative Production Example 4

A polymerization reaction was carried out in the same manner as in Production Example 1 except that the monomer composition was changed as shown in Table 2 and that 50 parts by mass of butyl acetate and 100 parts of toluene were used in place of 150 parts by mass of ethyl acetate. The obtained copolymer solution had a non-volatile content of 40.9%, a viscosity of 1,000 mPa·s, and a weight-average molecular weight of 300,000 (30x$10^4$).

Comparative Production Example 5

A polymerization reaction was carried out in the same manner as in Production Example 1 except that the monomer composition was changed as shown in Table 2. The obtained copolymer solution had a non-volatile content of 41.5%, a viscosity of 20,000 mPa·s, and a weight-average molecular weight of 1,250,000 (125x$10^4$).

Comparative Production Example 6

A polymerization reaction was carried out in the same manner as in Production Example 1 except that the monomer composition was changed as shown in Table 2. The obtained copolymer solution had a non-volatile content of 39.9%, a viscosity of 15,000 mPa·s, and a weight-average molecular weight of 900,000 (90x$10^4$).

Comparative Production Example 7

A polymerization reaction was carried out in the same manner as in Production Example 1 except that the monomer composition was changed as shown in Table 2 and that 50 parts by mass of butyl acetate and 100 parts of toluene were used in place of 150 parts of ethyl acetate. The obtained copolymer solution had a non-volatile content of 39.8%, a viscosity of 8,000 mPa·s, and a weight-average molecular weight of 700,000 (70x$10^4$).

Comparative Production Example 8

A polymerization reaction was carried out in the same manner as in Production Example 1 except that the monomer composition was changed as shown in Table 2. The obtained copolymer solution had a non-volatile content of 40.0%, a viscosity of 90,000 mPa·s, and a weight-average molecular weight of 2,100,000 (210x$10^4$).

Comparative Production Example 9

A polymerization reaction was carried out in the same manner as in Production Example 1 except that the monomer composition was changed as shown in Table 2. The obtained copolymer solution had a non-volatile content of 39.6%, a viscosity of 3,300 mPa·s, and a weight-average molecular weight of 400,000 (40x$10^4$).

Example 1

One hundred parts by mass of the copolymer solution obtained in Production Example 1, based on solids, was weighed out. While this solution was stirred, 0.2 parts by mass of an isocyanate compound (Coronate HX (trade name), produced by Nippon Polyurethane Industry Co., Ltd.) was added thereto as a crosslinking agent. The resulting mixture was uniformly mixed to obtain a pressure-sensitive adhesive composition.

Example 2

One hundred parts by mass of the copolymer solution obtained in Production Example 2, based on solids, was weighed out. While this solution was stirred, isocyanate compounds (0.1 parts by mass of Coronate HX (trade name) and 0.05 parts by mass of Millionate MR (trade name), both produced by Nippon Polyurethane Industry Co., Ltd.) were added as crosslinking agents. The resulting mixture was uniformly mixed to obtain a pressure-sensitive adhesive composition.

Example 3

One hundred parts by mass of the copolymer solution obtained in Production Example 3, based on solids, was weighed out. While this solution was stirred, 0.3 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Example 4

One hundred parts by mass of the copolymer solution obtained in Production Example 4, based on solids, was weighed out. While this solution was stirred, 0.15 parts of an isocyanate compound (Mitec NY 730A (trade name), produced by Mitsubishi Chemical Corporation) was added as a crosslinking agent. The resulting mixture was uniformly mixed to obtain a pressure-sensitive adhesive composition.

Example 5

One hundred parts by mass of the copolymer solution obtained in Production Example 5, based on solids, was weighed out. While this solution was stirred, 0.15 parts by mass of an isocyanate compound (Mitec NY 730A (trade name), produced by Mitsubishi Chemical Corporation) was added as a crosslinking agent. The resulting mixture was uniformly mixed to obtain a pressure-sensitive adhesive composition.

Example 6

One hundred parts by mass of the copolymer solution obtained in Production Example 6, based on solids, was weighed out. While this solution was stirred, 0.15 parts by mass of an isocyanate compound (Mitec NY 730A (trade name), produced by Mitsubishi Chemical Corporation) was added as a crosslinking agent. The resulting mixture was uniformly mixed to obtain a pressure-sensitive adhesive composition.

Example 7

One hundred parts by mass of the copolymer solution obtained in Production Example 7, based on solids, was weighed out. While this solution was stirred, 0.25 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Example 8

One hundred parts by mass of the copolymer solution obtained in Production Example 8, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Example 9

One hundred parts by mass of the copolymer solution obtained in Production Example 9, based on solids, was weighed out. While this solution was stirred, isocyanate compounds (0.2 parts by mass of Duranate 24A-100 (trade name), produced by Asahi Kasei Chemicals Corporation, and 0.05 parts by mass of Millionate MR (trade name), produced by Nippon Polyurethane Industry Co., Ltd.) were added as crosslinking agents. The resulting mixture was uniformly mixed to obtain a pressure-sensitive adhesive composition.

Example 10

One hundred parts by mass of the copolymer solution obtained in Production Example 10, based on solids, was weighed out. While this solution was stirred, 0.3 parts by mass of an isocyanate compound (Duranate 24A-100 (trade name), produced by Asahi Kasei Chemicals Corporation) was added as a crosslinking agent. The resulting mixture was uniformly mixed to obtain a pressure-sensitive adhesive composition.

Example 11

One hundred parts by mass of the copolymer solution obtained in Production Example 11, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Example 12

One hundred parts by mass of the copolymer solution obtained in Production Example 12, based on solids, was weighed out. While the solution was stirred, 0.15 parts by mass of an isocyanate compound (Coronate HX (trade name), produced by Nippon Polyurethane Industry Co., Ltd.) was added as a crosslinking agent, and the resulting mixture was uniformly mixed to obtain a pressure-sensitive adhesive composition.

Example 13

One hundred parts by mass of the copolymer solution obtained in Production Example 8, based on solids, was weighed out. While this solution was stirred, 100 parts by mass of rutile titanium oxide powder with an average particle diameter of 20 nm was added as a dielectric, and 0.25 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Comparative Example 1

One hundred parts by mass of the copolymer solution obtained in Comparative Production Example 1, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Comparative Example 2

One hundred parts by mass of the copolymer solution obtained in Comparative Production Example 2, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Comparative Example 3

One hundred parts by mass of the copolymer solution obtained in Comparative Production Example 3, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Comparative Example 4

One hundred parts by mass of the copolymer solution obtained in Comparative Production Example 4, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Comparative Example 5

One hundred parts by mass of the copolymer solution obtained in Comparative Production Example 5, based on solids, was weighed out. While this solution was stirred, 0.15 parts by mass of an isocyanate compound (Coronate HX (trade name), produced by Nippon Polyurethane Industry Co., Ltd.) was added as a crosslinking agent. The resulting mixture was uniformly mixed to obtain a pressure-sensitive adhesive composition.

Comparative Example 6

One hundred parts by mass of the copolymer solution obtained in Comparative Production Example 6, based on solids, was weighed out. While this solution was stirred, 0.15 parts by mass of an isocyanate compound (Duranate 24A-100 (trade name), produced by Asahi Kasei Chemicals Corporation) was added as a crosslinking agent. The resulting mixture was uniformly mixed to obtain a pressure-sensitive adhesive composition.

Comparative Example 7

One hundred parts by mass of the copolymer solution obtained in Comparative Production Example 7, based on solids, was weighed out. While this solution was stirred, 0.15 parts by mass of an isocyanate compound (Duranate 24A-100 (trade name), produced by Asahi Kasei Chemicals Corporation) was added as a crosslinking agent. The resulting mixture was uniformly mixed to obtain a pressure-sensitive adhesive composition.

Comparative Example 8

One hundred parts by mass of the copolymer solution obtained in Comparative Production Example 8, based on solids, was weighed out. While this solution was stirred, 0.15 parts by mass of an isocyanate compound (Duranate 24A-100 (trade name), produced by Asahi Kasei Chemicals Corporation) was added as a crosslinking agent. The resulting mixture was uniformly mixed to obtain a pressure-sensitive adhesive composition. However, because the obtained resin composition had a high viscosity, it was difficult to uniformly apply the composition to various substrates.

Comparative Example 9

One hundred parts by mass of the copolymer solution obtained in Comparative Production Example 9, based on solids, was weighed out. While this solution was stirred, 0.15 parts by mass of an isocyanate compound (Duranate 24A-100 (trade name), produced by Asahi Kasei Chemicals Corporation) was added as a crosslinking agent. The resulting mixture was uniformly mixed to obtain a pressure-sensitive adhesive composition.

Measurement of Nonvolatile Matter

Following JIS K-6833-1, about 1 g of each sample was precisely weighed on a balance to 4 decimal places. (The mass (g) of each sample is denoted by $W_{A0}$.) Subsequently, each sample was allowed to stand for 120 minutes at 105°C in a drying machine (DRM420DA forced-circulation dryer produced by Advantec Toyo Kaisha, Ltd.) to remove volatile matter. Thereafter, each sample was allowed to cool sufficiently at room temperature (about 23°C) in a desiccator, and then precisely weighed on a balance. (The mass (g) of each dried sample is denoted by $W_{A1}$.) The percent of nonvolatile matter was calculated using the following formula. The value indicated as a percentage was rounded off to one decimal place.

$$\text{Nonvolatile matter} = (W_{A1} / W_{A0}) \times 100\ (\%)$$

Measurement of Viscosity

Following JIS K-6833-1, measurement was carried out with a Brookfield rotational viscometer (TVB-10 produced by Toki Sangyo Co., Ltd.) under conditions where the sample temperature was 25°C and the rotational speed was 12 revolutions per minute.

Measurement of Molecular Weight

The molecular weight was measured by GPC under the conditions below.
GPC: Shimadzu Corporation (CTO-20A)
Columns: Produced by Showa Denko K.K. (KF-806 (8 mm in diameter, 300 mm in length), KF-804 (8 mm in diameter, 300 mm in length), and KF-802.5 (8 mm in diameter, 300 mm in length)) Sample concentration: 0.1%
Injected amount: 100 μl
Flow rate: 1.0 ml per minute
Eluent: Tetrahydrofuran (special grade chemical)
Column temperature: 50°C
Detector (RID-10A differential refractive index detector (RI) produced by Shimadzu Corporation)
Standard: Polystyrene
Table 1

| Composition | Production Example 1 | 2 | 3 | 4 | 5 | 6 | 7 | 8 | 9 | 10 | 11 | 12 |
|---|---|---|---|---|---|---|---|---|---|---|---|---|
| Monomer Composition (Part by Mass) | | | | | | | | | | | | |
| (a) Component | | | | | | | | | | | | |
| MA | - | 55 | - | - | - | - | - | 30 | - | - | - | - |
| EA | - | - | 70 | - | - | - | - | - | - | 85 | - | - |
| BA | 89 | - | - | 10 | - | - | - | - | 65 | - | 62.8 | - |
| 2-EHA | - | 5 | 5 | 70 | 80 | 60 | 60 | 40 | 5 | - | - | 70 |
| MMA | - | - | - | - | - | 25 | - | - | - | 5 | - | 15 |
| BMA | - | - | - | - | - | - | 25 | - | - | - | - | - |
| (b) Component | | | | | | | | | | | | |
| HEA | 5 | - | 10 | 10 | - | - | - | 10 | - | 0.1 | 20 | - |
| 4-HBA | - | 20 | 5 | - | 10 | 10 | 10 | - | 5 | - | - | 5 |
| (C) Component | | | | | | | | | | | | |
| AAm | 5 | - | 5 | - | - | 2 | 2 | - | - | - | 17 | - |
| DMAAm | - | - | - | 5 | - | - | - | 15 | 10 | 0.1 | - | 9.8 |
| DEAAm | - | 16.5 | - | - | 5 | - | - | - | 5 | - | - | - |
| (d) Component | | | | | | | | | | | | |
| VAc | 1 | - | 5 | 5 | - | 3 | - | 5 | 5 | 4.8 | 0.2 | 0.2 |
| VeoVa10 | - | 3.5 | - | - | 5 | - | 3 | - | 5 | 5 | - | - |
| Acid Monomer Component | | | | | | | | | | | | |
| AA | - | - | - | - | - | - | - | - | - | - | - | - |
| MAA | - | - | - | - | - | - | - | - | - | - | - | - |
| Theoretical Tg(°C) | -46.0 | -13.6 | -22.0 | -67.3 | -76.9 | -51.1 | -61.1 | -31.4 | -37.4 | -14.5 | -26.0 | -57.9 |
| Weight-average Molecular Weight | 900,000 ($90x10^4$) | 1,000,000 ($100x10^4$) | 1,300,000 ($130x10^4$) | 1,250,000 ($125x10^4$) | 1,050,000 ($105x10^4$) | 1,450,000 ($145x10^4$) | 990,000 ($99x10^4$) | 750,000 ($75x10^4$) | 1,300,000 ($130x10^4$) | 1,000,000 ($100x10^4$) | 1,200,000 ($120x10^4$) | 1,200,000 ($120x10^4$) |
| Viscosity(mPa·s) | 3200 | 7800 | 5000 | 3000 | 7200 | 3500 | 6000 | 4000 | 5000 | 3400 | 2800 | 3300 |

Table 2

| Composition | | Comparative Production Example 1 | 2 | 3 | 4 | 5 | 6 | 7 | 8 | 9 |
|---|---|---|---|---|---|---|---|---|---|---|
| Monomer Composition (Part by Mass) | (a) Component | | | | | | | | | |
| | MA | - | 80 | - | - | - | - | - | - | - |
| | EA | - | - | 85 | - | - | - | - | - | - |
| | BA | 89 | - | - | 10 | - | - | 20 | - | - |
| | 2-EHA | - | - | - | 70 | 75 | 60 | - | 40 | 60 |
| | MMA | - | - | - | - | - | - | 62 | - | - |
| | BMA | - | - | - | - | - | 25 | - | - | - |
| | (b) Component | | | | | | | | | |
| | HEA | 10 | - | 10 | 10 | 10 | - | - | 40 | 4.5 |
| | 4-HBA | - | - | - | - | - | 10 | 10 | - | - |
| | (c) Component | | | | | | | | | |
| | AAm | - | - | - | - | - | - | - | - | - |
| | DMAAm | - | 19.5 | 5 | 5 | 5 | - | 5 | 10 | - |
| | DEAAm | - | - | - | - | - | - | - | - | 35 |
| | (d) Component | | | | | | | | | |
| | VAc | 1 | - | - | 5 | 5 | - | 3 | 10 | 0.5 |
| | VeoVa10 | - | 0.5 | - | - | - | - | - | - | - |
| | Acid Monomer Component | | | | | | | | | |
| | AA | - | - | - | - | 5 | - | - | - | - |
| | MAA | - | - | - | - | - | 5 | - | - | - |
| Theoretical Tg(°C) | | -50.0 | 24.4 | -16.7 | -67.2 | -64.7 | -59.6 | 30.0 | -38.4 | -39.1 |
| Weight-average Molecular Weight | | 1,300,000 $(130x10^4)$ | 150,000 $(15x10^4)$ | 1,000,000 $(100x10^4)$ | 300,000 $(30x10^4)$ | 1,250,000 $(125x10^4)$ | 900,000 $(90x10^4)$ | 700,000 $(70x10^4)$ | 2,100,000 $(210x10^4)$ | 400,000 $(40x10^4)$ |
| Viscosity(mPa·s) | | 8200 | 2100 | 5000 | 1000 | 20000 | 15000 | 8000 | 90000 | 3300 |

The abbreviations used in Tables 1 to 5 are as follows.

MA: Methyl acrylate
EA: Ethyl acrylate
BA: Butyl acrylate
2-EHA: 2-Ethylhexyl acrylate
MMA: Methyl methacrylate
BMA: Butyl methacrylate
HEA: 2-Hydroxyethyl acrylate
4-HBA: 4-Hydroxybutyl acrylate
VAc: Vinyl acetate

VeoVa10: Trade name for vinyl versatate produced by Japan Epoxy Resins Co., Ltd.
AAm: Acrylamide
DMAAm: N,N-dimethylacrylamide
DEAAm: N,N-diethylacrylamide
AA: Acrylic acid
MAA: Methacrylic acid
Coro HX: Coronate HX, trade name for HDI isocyanurate non-yellowing polyisocyanate produced by Nippon Polyurethane Industry Co., Ltd.
NY730: MITEC NY730A, trade name for HDI isocyanurate non-yellowing polyisocyanate produced by Mitsubishi Chemical Corporation
24A100: Duranate 24A-100, trade name for HDI-biuret non-yellowing polyisocyanate produced by Asahi Kasei Chemicals Corporation Milli MR: Millionate MR, trade name for polymethylene polyphenyl polyisocyanate produced by Nippon Polyurethane Industry Co., Ltd.

Preparation of pressure-sensitive adhesive Sheet

Each of the pressure-sensitive adhesive compositions obtained in the Examples and Comparative Examples was diluted with ethyl acetate to a concentration of 22%. Each diluted composition was applied onto a 25-μm-thick base film (material: PET) by using a 400-μm doctor blade, and then each obtained specimen was placed in a thermostatic bath at 105° C to be dried for 5 minutes, thereby giving a pressure-sensitive adhesive sheet of 50 pm in dry film thickness. Further, a 38-μm-thick release film (release PET film) was adhered onto each pressure-sensitive adhesive sheet, followed by curing in a thermostatic bath at 50°C for 48 hours, thereby giving a pressure-sensitive adhesive sheet.

Evaluation of Pressure-sensitive Adhesive Strength

Following JIS Z-0237, in a constant-temperature room at 23°C with a relative humidity of 50%, each of the pressure-sensitive adhesive sheets obtained in the Preparation of pressure-sensitive adhesive Sheet section was cut into strips having a width of 25 mm and a nominal length of 100 mm and adhered onto the surface of a 5-mm-thick glass plate, the surface of a 2-mm-thick acrylic plate, the surface of a 2-mm-thick polycarbonate plate, and the ITO-sputtered surface (amorphous ITO) of a PET film by rolling a 2-kg rubber roller back and forth one time thereover at a speed of 300 mm per minute. After the specimens were allowed to stand for 24 hours, a 180-degree peel strength test (N/25 mm) was conducted using a tensile tester (Shimadzu Corporation: EZ-L) at a peel rate of 300 mm per minute.

Evaluation of Holding Force

Following JIS Z-0237, each of the pressure-sensitive adhesive sheets obtained in the Preparation of pressure-sensitive adhesive Sheet section was cut into a strip having a length of 25 mm and a width of 25 mm, and the release film of each was peeled off. Each of the cut pressure-sensitive adhesive sheets was then adhered onto a SUS304 plate by rolling a 2-kg rubber roller back and forth one time thereover at a speed of 300 mm per minute. The specimens were allowed to stand at a room temperature of 23°C and a relative humidity of 50% for 20 minutes, and further allowed to stand in a thermostatic bath at 40°C for 20 minutes. Thereafter, a one-kilogram load was applied to each of the specimens in a constant-temperature room at 40°C for 1 hour, and then it was examined whether the specimens were dragged from the bonded position or whether they dropped. When a specimen does not drop, or a specimen is less dragged, the specimen is considered to be an excellent pressure-sensitive adhesive sheet with stronger holding force (cohesion).

Evaluation of Transparency

The release film was peeled off from each of the pressure-sensitive adhesive sheets prepared in the Preparation of pressure-sensitive adhesive Sheet section above, and the total light transmittance (%) and the haze value (%) were measured at a room temperature of 23°C and a relative humidity of 50% using a haze meter (NDH2000 produced by Nippon Denshoku Industries Co., Ltd.) to obtain the initial values. When the total light transmittance is higher, and/or the haze value is lower, the specimen is considered to be an excellent pressure-sensitive adhesive sheet with higher transparency.

Evaluation of Coloration

The release film was peeled off from each of the pressure-sensitive adhesive sheets prepared in the Preparation

of pressure-sensitive adhesive Sheet section above, and measurement was carried out with a colorimeter (SpectroEye produced by GretagMacbeth AG) at a room temperature of 28°C and a relative humidity of 50% to obtain the b* value as an initial value. The initial value of each is listed under Color difference (b*) in Tables 3 to 5. When the b* value is closer to zero, the specimen is considered to be less yellowed and to be an excellent pressure-sensitive adhesive sheet.

Evaluation of Heat Resistance

The release film was peeled off from each of the pressure-sensitive adhesive sheets prepared in the Preparation of pressure-sensitive adhesive Sheet section, and each specimen was allowed to stand in a thermostatic bath at 80°C for 1,000 hours. Thereafter, measurement was carried out with the colorimeter (SpectroEye produced by GretagMacbeth AG) to obtain the after-test b* value, and the developmental state of bubbles and bulges was assessed by visual inspection. In Tables 3 to 5, these are shown as Color difference (b*) and Bubbles·bulges under After heat resistance test.

Evaluation of Moist-Heat Resistance

The release film was peeled off from each of the pressure-sensitive adhesive sheets prepared in the Preparation of pressure-sensitive adhesive Sheet section. Each specimen was allowed to stand in a thermostatic bath at a temperature of 60°C and a relative humidity of 90% for 1,000 hours. Thereafter, measurement was carried out using the colorimeter (SpectroEye produced by GretagMacbeth AG) and the haze meter (NDH2000 produced by Nippon Denshoku Industries Co., Ltd.) to obtain the b* value and the haze value (%), respectively, followed by assessment of the developmental state of bubbles and bulges by visual inspection. Subsequently, each specimen was allowed to stand in a room with a constant temperature and constant humidity at 23°C with a relative humidity of 50% for 4 hours, and then the haze value was measured (whitening). In Tables 3 to 5, these are shown as Color difference (b*), Haze value (%), Whitening (%), and Bubbles·bulges under After moist-heat resistance test.

ITO Corrosion (%)

Each of the pressure-sensitive adhesive sheets prepared in the Preparation of Pressure-sensitive Adhesive Sheet section was cut into a strip having a length of 100 mm and a width of 50 mm, and the release film was peeled off. Each of the cut pressure-sensitive adhesive sheets was then adhered onto the ITO-sputtered surface of a PET film, the surface of which is 120 mm in length, 50 mm in width, and 125 μm in thickness, by rolling a 2-kg rubber roller back and forth one time thereover at a speed of 300 mm per minute, thereby giving a specimen. Each specimen was allowed to stand in a room with a constant temperature and constant humidity at 60°C with a relative humidity of 90% for 1,000 hours. Thereafter, measurement was carried out with a tester (R8340A produced by Advantest Corporation) to obtain the resistance value ($R_1$) to make a comparison with the resistance value ($R_0$) obtained before the test. When the value (the increase rate of the resistance value) obtained by the following formula is smaller, the specimen is considered to be an excellent pressure-sensitive adhesive sheet with the ITO being less corroded.

$$\text{ITO corrosion (\%)} = (R_1 - R_0) / R_0 \times 100$$

Gap-filling Ability to Fill the Printing Gap

On glass plates of 150 mm in length and 100 mm in width, black ink (screen printing ink) was applied with a coater so as to be 100 mm in length, 50 mm in width, and 20 pm in thickness to create an uneven surface having a 20-μm height difference, thereby giving test substrates. Each of the pressure-sensitive adhesive sheets prepared in the Preparation of pressure-sensitive adhesive Sheet section was cut into a strip having a length of 100 mm and a width of 25 mm, and the release film was peeled off. Each cut pressure-sensitive adhesive sheet was then adhered onto a separate test substrate at a room temperature of 23°C and a relative humidity of 50% by rolling a 2-kg rubber roller back and forth one time thereover at a speed of 300 mm per minute and then allowed to stand for 24 hours, followed by assessing the state of the rising portion of the uneven surface. In Tables 3 to 5, the state (gap-filling ability) is denoted by the following symbols.

S: No bubbles are observed at all.
A: Small round bubbles are somewhat observed.
B: Large bubbles are observed, and some bubbles may be connected to one another.

C: Large bubbles are connected and spread out in a linear manner in the rising portion.

Gel Fraction

Pressure-sensitive adhesive sheets were prepared using release films instead of the 25-pm base films used in the Preparation of pressure-sensitive adhesive Sheet section and were each cut into a strip having a width of 50 mm and a length of 50 mm. The release films on both surfaces of each pressure-sensitive adhesive sheet were peeled off, thereby giving a specimen (mass: $W_{B1}$). Each specimen was wrapped with a mesh container (300 mesh, 45-μm opening, mass: $W_{B2}$) and immersed in ethyl acetate to stand for 168 hours. Insoluble matter was withdrawn together with the mesh container and dried at 150°C for 1 hour, followed by measurement of the mass (mass: $W_{B3}$) to obtain the gel fraction by using the following formula.

$$\text{Gel fraction} = (W_{B3} - W_{B2}) / W_{B1} \times 100\ (\%)$$

Permittivity

Each of the pressure-sensitive adhesive compositions obtained in the Examples and Comparative Examples was applied onto a release film to form a pressure-sensitive adhesive resin layer of 500 μm in dry film thickness, and then allowed to stand at a room temperature of 23°C and a relative humidity of 50% for 72 hours, followed by further standing in a thermostatic bath at 50°C for 48 hours, thereby giving a specimen. After each specimen was cut into a strip having a width of 25 mm and a length of 25 mm, the release film was peeled off, and the permittivity of each obtained pressure-sensitive adhesive resin layer was measured with an impedance measuring device (4291B produced by Hewlett-Packard Japan Ltd.) at a frequency of 100 MHz.

Table 3

| Performance Evaluation | | Example 1 | 2 | 3 | 4 | 5 | 6 | 7 | 8 | 9 | 10 | 11 | 12 |
|---|---|---|---|---|---|---|---|---|---|---|---|---|---|
| Curing Agent | | Coro HX | Coro HX | Coro HX | NY730 | NY730 | NY730 | Coro HX | Coro HX | 24A100 | 24A100 | Coro HX | Coro HX |
| Content (Part by Mass) | | 0.2 | 0.2 | 0.3 | 0.15 | 0.15 | 0.15 | 0.25 | 0.15 | 0.2 | 0.3 | 0.15 | 0.15 |
| Curing Agent | | - | Milli MR | - | - | - | - | - | - | Milli MR | - | - | - |
| Content (Part by Mass) | | - | 0.05 | - | - | - | - | - | - | 0.05 | - | - | - |
| Test Item | | | | | | | | | | | | | |
| Peel Strength (N/25mm) | : Glass Plate | 15.3 | 12.7 | 14.5 | 13.4 | 16.2 | 18.7 | 13.5 | 16.7 | 15.5 | 13.9 | 15.1 | 18.4 |
| | : Acrylic Plate | 14.3 | 11.1 | 16.4 | 12.3 | 15.9 | 18.7 | 15.8 | 17.0 | 13.0 | 14.4 | 16.0 | 17.0 |
| | : Polycarbonate Plate | 12.1 | 10.0 | 11.9 | 10.5 | | 15.5 | 10.7 | 12.4 | 12.4 | 11.1 | 13.5 | 15.5 |
| | : ITO Film | 8.4 | 6.7 | 6.7 | 7.5 | 10.1 | 10.2 | 7.3 | 8.1 | 9.0 | 6.9 | 10.2 | 9.3 |
| Holding Force (mm) | | 0 | 0 | 0 | 0 | 0 | 0 | 0 | 0 | 0 | 0 | 0 | 0 |
| ITO Corrosion (%) | | 2.5 | 3.3 | 1.9 | 1.5 | 2.0 | 3.3 | 3.6 | 2.0 | 2.3 | 2.0 | 3.4 | 2.7 |
| Gap-filling ability | | S | A | S | S | S | A | S | S | S | S | S | S |
| Permittivity | | 3.2 | 3.5 | 4.0 | 3.9 | 3.6 | 3.8 | 3.9 | 3.6 | 4.3 | 3.7 | 3.0 | 3.2 |
| Total Light Transmittance (%) | | 90.5 | 91.2 | 92.5 | 90.1 | 91.1 | 90.7 | 92.2 | 92.3 | 91.9 | 90.5 | 91.0 | 91.1 |
| Gel Fraction (%) | | 52 | 48 | 59 | 45 | 60 | 55 | 57 | 45 | 50 | 51 | 49 | 55 |
| Color Difference (b*) | | 0.1 | 0.1 | 0.2 | 0.1 | 0.0 | 0.2 | 0.3 | 0.2 | 0.3 | 0.1 | 0.1 | 0.1 |
| Haze Value (%) | | 2.1 | 3.2 | 2.7 | 2.3 | 2.5 | 3.2 | 2.2 | 2.4 | 2.4 | 1.9 | 2.0 | 2.5 |
| After Heat-resistance Test | | | | | | | | | | | | | |
| Color Difference (b*) | | 0.1 | 0.1 | 0.2 | 0.1 | 0.1 | 0.2 | 0.3 | 0.2 | 0.3 | 0.2 | 0.1 | 0.1 |
| Bubbles·Bulges | | No | No | No | No | No | No | No | No | No | No | No | No |
| After Moist-Heat -Resistance Test | | | | | | | | | | | | | |
| Color Difference (b*) | | 0.1 | 0.1 | 0.2 | 0.1 | 0.1 | 0.2 | 0.3 | 0.2 | 0.3 | 0.2 | 0.1 | 0.1 |
| Haze Value (%) | | 4.3 | 5.5 | 3.0 | 3.2 | 4.5 | 4.3 | 3.2 | 4.1 | 3.0 | 4.2 | 3.3 | 2.9 |

(continued)

| Performance Evaluation | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Whitening (%) | 2.2 | 3.4 | 2.7 | 2.5 | 2.4 | 3.3 | 2.5 | 2.4 | 2.3 | 2.0 | 2.0 | 2.7 |
| Bubbles-Bulges | No | No | No | No | No | No | No | No | No | No | No | No |

Table 4

| Performance Evaluation | | Example 13 |
|---|---|---|
| Curing Agent<br>Content (Part by Mass) | | Coro HX<br>0.25 |
| Dielectric<br>Content (Part by Mass) | | Titanium Oxide<br>100 |
| Test Item | | |
| Peel Strength (N/25mm) | : Glass Plate | 12.1 |
| | : Acrylic Plate | 11.7 |
| | : Polycarbonate Plate | 10.5 |
| | : ITO Film | 7.1 |
| Holding Force (mm) | | 0 |
| ITO Corrosion (%) | | 2.8 |
| Gap-filling ability | | A |
| Permittivity | | 7.2 |
| Total Light Transmittance (%) | | 89.0 |
| Gel Fraction | | 48 |
| Color Difference (b*) | | 0.2 |
| Haze Value (%) | | 2.6 |
| After Heat-resistance Test<br>Color Difference (b*)<br>Bubbles·Bulges | | <br>0.3<br>No |
| After Moist-Heat<br>-Resistance Test<br>Color Difference (b*)<br>Haze Value (%)<br>Whitening (%)<br>Bubbles·Bulges | | <br><br>0.3<br>6.5<br>3.3<br>No |

Table 5

| | Comparative Example | | | | | | | | |
|---|---|---|---|---|---|---|---|---|---|
| Performance Evaluation | 1 | 2 | 3 | 4 | 5 | 6 | 7 | 8 | 9 |
| Curing Agent Content (Part) | Coro HX 0.15 | Coro HX 0.15 | Coro HX 0.15 | Coro HX 0.15 | Coro HX 0.15 | 24A100 0.15 | 24A100 0.15 | 24A100 0.15 | 24A100 0.15 |
| Test Item | | | | | | | | | |
| Peel Strength: Glass Plate | 6.7 | 10.2 | 12.3 | 3.3 | 15.5 | 16.7 | 2.3 | Not evaluated because coating cannot be applied | 5.7 |
| (N/25mm) : Acrylic Plate | 5.4 | 6.2 | 13.4 | 5.4 | 14.7 | 13.3 | 4.5 | | 6.0 |
| : Polycarbonate Plate | 3.1 | 3.7 | 7.5 | 1.5 | 12.2 | 11.1 | 3.2 | | 4.5 |
| : ITO Film | 1.0 | 5.3 | 6.0 | 0.2 | 11.3 | 10.0 | 1.6 | | 0.5 |
| Holding Force (mm) | Dropped | Dropped | Dropped | Dropped | 0.1mm | 0.2mm | Dropped | | Dropped |
| ITO Corrosion (%) | 5.0 | 4.5 | 6.5 | 3.2 | 30.0 | 25.7 | 7.7 | | 4.2 |
| Gap-filling ability | C | C | B | C | B | A | C | | A |
| Permittivity | 2.5 | 3.6 | 3.2 | 3.1 | 3.0 | 3.4 | 3.3 | | 2.1 |
| Total Light Transmittance (%) | 91.1 | 90.1 | 91.5 | 91.3 | 90.0 | 91.1 | 92.3 | | 87.4 |
| Gel Fraction (%) | 45 | 60 | 35 | 60 | 70 | 75 | 55 | | 27 |
| Color Difference ($b^*$) | 0.3 | 0.3 | 0.4 | 0.5 | 0.2 | 0.1 | 0.2 | | 0.3 |
| Haze Value (%) | 3.7 | 4.5 | 2.1 | 3.3 | 2.5 | 5.0 | 5.0 | | 3.1 |
| After Heat-resistance Test | | | | | | | | | |
| Color Difference ($b^*$) | 0.5 | 0.4 | 0.5 | 0.5 | 0.3 | 0.2 | 0.3 | | 0.3 |
| Bubbles·Bulges | No | Yes | No | Yes | No | No | No | | Yes |
| After Moist-Heat -Resistance Test | | | | | | | | | |
| Color Difference ($b^*$) | 0.3 | 0.4 | 0.4 | 0.5 | 0.2 | 0.2 | 0.3 | | 0.3 |
| Haze Value (%) | 12.5 | 13.0 | 3.5 | 19.7 | 4.5 | 5.5 | 7.0 | | 15.6 |
| Whitening (%) | 10.0 | 11.5 | 3.0 | 15.2 | 3.2 | 4.0 | 6.5 | | 9.9 |
| Bubbles·Bulges | No | Yes | No | Yes | No | No | No | | Yes |

As shown in Table 3, the pressure-sensitive adhesive compositions and pressure-sensitive adhesive sheets of the present invention, which are for a touch screen panel and which include an acrylic polymer, have been confirmed to have high transparency, adhesion, and durability, while excellent in corrosion resistance, uneven-surface conformability and permittivity; thus, the pressure-sensitive adhesive compositions and pressure-sensitive adhesive sheets have been found useful as a pressure-sensitive adhesive composition particularly for an electrostatic capacitance touch screen panel.

Industrial Applicability

The present invention can provide an acrylic polymer for use in a pressure-sensitive adhesive composition for a touch screen panel that substantially contains no carboxy groups and that is excellent in terms of transparency, adhesion, durability, non-corrosiveness, gap-filling ability, high permittivity, and coatability. The present invention can also provide a pressure-sensitive adhesive composition for a touch screen panel comprising the acrylic polymer, and a pressure-sensitive adhesive sheet comprising the acrylic polymer.

Explanation of Reference Letters

(a) a cover glass or PET film
(b) a pressure-sensitive adhesive
(c) an ITO transparent conductive film
(d) a substrate
(e) an ITO transparent conductive film
(f) a pressure-sensitive adhesive
(g) a back glass or PET film
(h) a frame or a bezel

## Claims

1. An acrylic polymer for use in an adhesive composition for a touch screen panel, the compound being obtained by copolymerizing monomer components comprising

(a) a $C_{1-12}$ hydrocarbon group-containing (meth)acrylic acid ester monomer,
(b) a hydroxy group-containing (meth)acrylic acid ester monomer,
(c) an amide group-containing monomer, and
(d) a vinyl ester monomer, and

the compound having a resin acid value of 0.1 mg KOH/g or less, a weight-average molecular weight of 400,000 to 2,000,000, a Tg of -80 to 0°C, and a permitivity of 3 to 6.

2. The acrylic polymer according to claim 1, wherein the ratio of the monomer components forming the acrylic polymer is that
the content of the $C_{1-12}$ hydrocarbon group-containing (meth)acrylic acid ester monomer (a) is 60 to 95 mass%,
the content of the hydroxy group-containing (meth)acrylic acid ester monomer (b) is 0.1 to 20 mass%,
the content of the amide group-containing monomer (c) is 0.1 to 30 mass%, and
the content of the vinyl ester monomer (d) is 0.1 to 10 mass%.

3. The acrylic polymer according to claim 1 or 2, wherein the amide group-containing monomer (c) is represented by Formula (1)

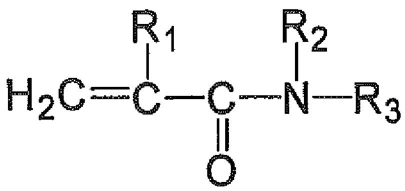 (1)

wherein $R_1$ is hydrogen or methyl, and $R_2$ and $R_3$ are the same or different and each represents hydrogen or $C_{1-4}$ linear or branched alkyl.

4. The acrylic polymer according to one of claims 1 to 3, wherein the touch screen panel is a capacitive touch screen panel.

5. A pressure-sensitive adhesive sheet for use in a capacitive touch screen panel, comprising the acrylic polymer of one of claims 1 to 3.

6. A pressure-sensitive adhesive composition for a touch screen panel, comprising the acrylic polymer of one of claims 1 to 3 and a crosslinking agent that crosslinks with the acrylic polymer.

7. The pressure-sensitive adhesive composition for a touch screen panel according to claim 6, the composition comprising an inorganic dielectric powder in an amount of 0.01 to 200 parts by mass per 100 parts by mass of the acrylic polymer and having a permittivity of 3 to 10.

8. The pressure-sensitive adhesive composition for a touch screen panel according to claim 6 or 7, wherein the touch screen panel is a capacitive touch screen panel.

9. A pressure-sensitive adhesive sheet for use in a capacitive touch screen panel, the sheet comprising the pressure-sensitive adhesive composition for a touch screen panel of claim 6 or 7.

Figure 1

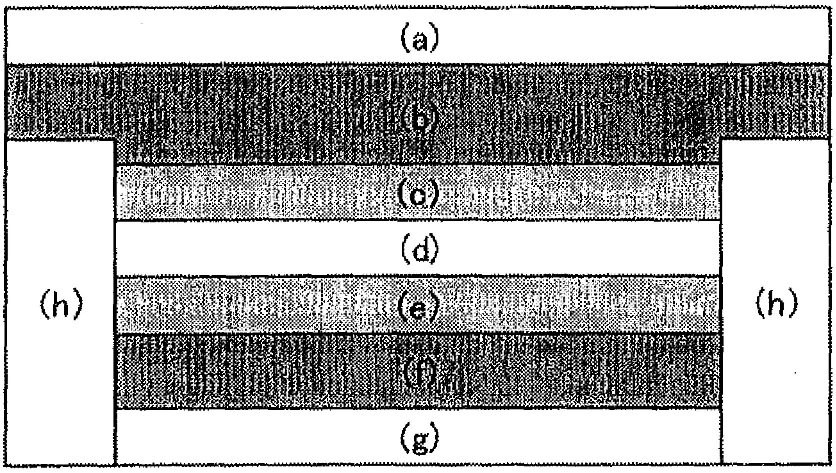

## INTERNATIONAL SEARCH REPORT

International application No.
PCT/JP2011/068600

A. CLASSIFICATION OF SUBJECT MATTER
*C09J133/14*(2006.01)i, *C09J7/02*(2006.01)i, *C09J133/24*(2006.01)i, *G06F3/041*(2006.01)i

According to International Patent Classification (IPC) or to both national classification and IPC

B. FIELDS SEARCHED

Minimum documentation searched (classification system followed by classification symbols)
C09J133/14, C09J7/02, C09J133/24, G06F3/041

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2003-268335 A (3M Innovative Properties Co.),<br>25 September 2003 (25.09.2003),<br>claims; paragraphs [0017], [0026], [0030]; example 1<br>(Family: none) | 1,3-4<br>5-6,8-9<br>2,7 |
| Y<br>A | WO 2010/064623 A1 (Nitto Denko Corp.),<br>10 June 2010 (10.06.2010),<br>claims; paragraphs [0005], [0109], [0114] to [0115]<br>& JP 2010-155974 A | 5-6,8-9<br>1-4,7 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 September, 2011 (06.09.11) | 18 October, 2011 (18.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2011/068600

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2010-077287 A (Nitto Denko Corp.), 08 April 2010 (08.04.2010), claims; paragraphs [0030], [0080], [0085], [0090]<br>& US 2010/0080991 A1 & EP 2169024 A1<br>& CN 101684394 A | 5-6,8-9<br>1-4,7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009155503 A
- JP 2009079203 A
- JP 2005325250 A